# EUROPÄISCHE PATENTANMELDUNG

(11) **EP 1 892 440 A1**
(43) Veröffentlichungstag der Anmeldung: **27.02.2008**
(21) Anmeldenummer: 07014563.6
(22) Anmeldetag: 25.07.2007
(51) Int. Cl.: F16J 1/00, F15B 15/14

(54) **Kolben**

(30) Priorität: 23.08.2006 DE 102006039543
(71) Anmelder: LuK Lamellen und Kupplungsbau Beteiligungs KG, 77815 Bühl (DE)
(72) Erfinder: Grabenstätter, Jan, 76593 Gernsbach (DE)

(57) **Zusammenfassung**

Kolben (15) für einen Zylinder (16), insbesondere Kolben für einen Geberzylinder oder Nehmerzylinder eines hydraulischen Systems, insbesondere eines hydraulischen Systems zur Betätigung einer Fahrzeugkupplung oder Betriebsbremse eines Kraftfahrzeuges, wobei der Kolben (15) und der Zylinder (16) einen Druckraum (17) einschließen, der mittels einer Dichtung (19) gegenüber einem Nachlaufraum oder gegenüber der Umgebung abgedichtet ist.

Der Kolben (15) weist eine Dichtungsaufnahme (22) mit einem im Wesentlichen kegelförmigen Dichtungssitz (23) zur Aufnahme der Dichtung (19) auf.

## Beschreibung

Die vorliegende Erfindung betrifft einen Kolben für einen Zylinder, insbesondere Kolben für einen Geberzylinder oder Nehmerzylinder eines hydraulischen Systems, insbesondere eines hydraulischen Systems zur Betätigung einer Fahrzeugkupplung oder Betriebsbremse eines Kraftfahrzeuges, wobei der Kolben und der Zylinder einen Druckraum einschließen, der mittels einer Dichtung gegenüber einem Nachlaufraum oder gegenüber der Umgebung abgedichtet ist. Die Erfindung betrifft des Weiteren ein Verfahren zur Herstellung eines solchen Kolbens.

Zur axialen Fixierung der bewegten Dichtung in einem Geber- oder Nehmerzylinder befindet sich die Dichtung im Stand der Technik entweder in einer Nut auf dem Kolben oder sie wird durch ein zusätzliches Bauteil axial fixiert. Bei einem Kunststoffkolben mit Nut befindet sich die Werkzeugtrennebene unter anderem auch im Nutgrund. Da im Nutgrund die Dichtung des Zylinders abdichtet sind entstehen bei bekannten Anordnungen von Dichtungen an Kolben aufgrund von zu großem Werkzeugversatz und einem daraus resultierenden axial verlaufendem Grat nach der Entformung des Spritzgussbauteils aus der Form bzw. Matrize Probleme bei der Dichtigkeit.

Eine Aufgabe der vorliegenden Erfindung ist es, die Zuverlässigkeit der Dichtungswirkung zwischen Kolben und Dichtung zu verbessern.

Dieses Problem wird gelöst durch einen Kolben für einen Zylinder, insbesondere Kolben für einen Geberzylinder oder Nehmerzylinder eines hydraulischen Systems, insbesondere eines hydraulischen Systems zur Betätigung einer Fahrzeugkupplung oder Betriebsbremse eines Kraftfahrzeuges, wobei der Kolben und der Zylinder einen Druckraum einschließen, der mittels einer Dichtung gegenüber einem Nachlaufraum oder gegenüber der Umgebung abgedichtet ist, wobei der Kolben eine Dichtungsaufnahme mit einem im Wesentlichen kegelförmigen Dichtungssitz zur Aufnahme der Dichtung aufweist. Vorzugsweise ist vorgesehen, dass die Dichtungsaufnahme eine umlaufende Ringnut umfasst, in die eine umlaufende Ausbuchtung der Dichtung eingreift. Durch das umgreifen der Ringnut durch die Ausbuchtung wird eine formschlüssige Verbindung zwischen Kolben und Dichtung hergestellt. Die Dichtung kann zur Montage über den kegelförmigen Dichtungssitz aufgeschoben werden.

Die Dichtung besitzt am Innendurchmesser des Dichtungsrückens also zusätzlich eine Ausbuchtung. Diese greift in die umlaufende Nut des Kolbens ein. Hierdurch wird die Dichtung am Kolben fixiert. Die Abdichtung zwischen Kolben und Dichtung findet an der inneren Lippe der Dichtung statt. An dieser Stelle kann der Kunststoffkolben in axiale Richtung entformt werden wodurch der Dichtungssitz keinen Werkzeugversatz besitzt bzw. Gratfrei ist.

Die umlaufende Ringnut hat bevorzugt einen im Wesentlichen trapezförmigen Querschnitt. Vorzugsweise ist vorgesehen, dass die umlaufende Ausbuchtung einen zu der umlaufenden Ringnut korrespondierenden Querschnitt hat. Vorzugsweise ist vorgesehen, dass die umlaufende Ringnut an der dem Druckraum abgewandten Seite der Dichtungsaufnahme angeordnet ist. Der Kolben ist bevorzugt aus Kunststoff z.B. als Spritzgussteil gefertigt. Vorzugsweise ist vorgesehen, dass der kegelförmige Dichtungssitz mittels einer axial entformbaren Matrize hergestellt wurde. Der Dichtungssitz ist vorzugsweise gratfrei ausgebildet, vorzugsweise indem der kegelförmige Dichtungssitz mittels einer axial entformbaren Matrize hergestellt wird.

Da eingangs genannte Problem wird auch gelöst durch ein Verfahren zur Herstellung eines erfindungsgemäßen Kolbens, wobei dieser durch Gießen, insbesondere Spritzgießen, hergestellt wird, wobei der kegelförmige Dichtungssitz bevorzugt mittels einer axial entformbaren Matrize hergestellt wird.

Im Folgenden werden Ausführungsbeispiele der Erfindung anhand der beiliegenden Zeichnungen erläutert. Dabei zeigen:
- Fig. 1: eine schematische Darstellung eines hydraulischen Systems anhand eines Ausführungsbeispiels einer Kupplungsausrückvorrichtung;
- Fig. 2: einen Teilschnitt durch einen Hydraulikzylinder mit einem erfindungsgemäßem Kolben und einer erfindungsgemäßen Dichtung.

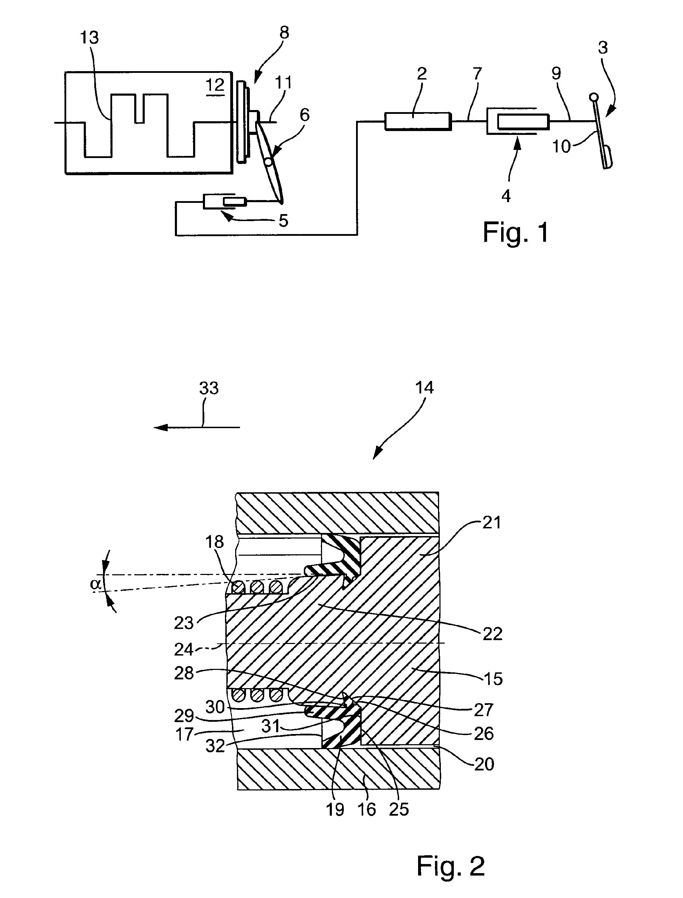

Fig. 1 zeigt in schematischer Darstellung eine mögliche Ausgestaltung eines hydraulischen Systems 1 mit einem Druckbegrenzungsventil (Kribbelfilter) 2, einem Geberzylinder 4, einem Nehmerzylinder 5. Der Nehmerzylinder 5 betätigt eine Kupplungsausrückvorrichtung 3. Die Kupplungsausrückvorrichtung 3 betätigt die Kupplung 8 hydraulisch durch Beaufschlagung des Geberzylinders 4 mittels eines Betätigungsgliedes 9, das ein Fußpedal, ein Aktor, beispielsweise ein elektrischer Aktor, oder dergleichen sein kann. Hierdurch wird mittels einer mechanischen Übertragung 10 Druck im Geberzylinder 4 aufgebaut, der über die Druckleitung 7 sowie über das darin angeordnete Druckbegrenzungsventil 2 einen Druck im Nehmerzylinder 5 aufbaut. Der Nehmerzylinder 5 betätigt über eine Ausrückmechanik 6 einen nicht näher dargestellten Ausrücker, beispielsweise ein Ausrücklager, der z.B. über eine Tellerfeder eine Kupplungsscheibe betätigt. Der Nehmerzylinder 5 kann alternativ konzentrisch um die Getriebeeingangswelle 11 angeordnet sein und sich axial an einemnicht dargestellten - Getriebegehäuse abstützen und die nötige Ausrückkraft über das Ausrücklager an der Kupplung 8, beziehungsweise an deren Ausrückelementen wie einer Tellerfeder, aufbringen. Zum Aufbringen der Ausrückkraft ist der Nehmerzylinder 5 jeweils gehäusefest am Getriebegehäuse, das hier nicht näher dargestellt ist, oder an einem anderen gehäusefesten Bauteil angebracht. Die Getriebeeingangswelle 11 überträgt bei geschlossener Kupplung 8 das Drehmoment der Brennkraftmaschine 12 auf ein nicht näher dargestelltes Getriebe und anschließend auf die Antriebsräder eines Kraftfahrzeuges. Das Druckbegrenzungsventil 2 ist zur Dämpfung von Schwingungen, die durch die Kurbelwelle und die Kupplung über den Nehmerzylinder in das hydraulische System eingebracht werden, in der Druckleitung 7 angeordnet.

Fig. 2 zeigt einen Teilschnitt durch eine Kolben/Zylinderanordnung 14. Die Kolben/Zylinderanordnung 14 kann beispielsweise der Geberzylinder 4 oder der Nehmerzylinder 5 gemäß Fig. 1 sein. Die Kolben/Zylinderanordnung 14 umfasst einen Kolben 15, der beweglich in einem Zylinder 16 angeordnet ist. Der Kolben 15 und der Zylinder 16 schließen einen Druckraum 17 ein. In Fig. 2 nicht dargestellt sind hydraulische Zu- und Ableitungen des Druckraums 17, hier ist bei einem Geber- sowie einem Nehmerzylinder ein Hydraulikanschluss zur Verbindung mit der Druckleitung 7 vorgesehen, bei einem Geberzylinder ist zusätzlich eine Schnüffeleinrichtung vorhanden, die beispielsweise mit dem Kolben 15 nach Art eines Ventils zusammenwirken kann. Der Kolben 15 wird durch eine Vorlastfeder 18 in eine Richtung gedrückt, die Anordnung und Druckrichtung der Vorlastfeder 18 hängt vom Verwendungszweck der Kolben/Zylinderanordnung als Geberzylinder 4 oder Nehmerzylinder 5 ab.

Eine Dichtung 19 dichtet den Druckraum 17 gegenüber einem Nachlaufraum oder der Umgebung, über die der Druckraum 17 vermittels eines Spaltes 20 zwischen Kolben 15 und Zylinder 16 verbunden ist, ab. Entlang des Spaltes 20 können sich weitere Dichtungen anschließen, so kann z. B. die Dichtung 19 bei einem Geberzylinder eine Primärdichtung sein, an die sich eine Sekundärdichtung zur Dichtung des zwischen beiden eingeschlossenen Nachlaufraumes gegenüber der Umgebung anschließen kann. Der Kolben 15 umfasst einen Kolbenkörper 21, der in etwa einen Außendurchmesser geringfügig kleiner als der Innendurchmesser des Zylinders 16 aufweist, so dass zwischen beiden eine Spielpassung ist. In Richtung des Druckraums 17 schließt sich an den Kolbenkörper 21 eine Dichtungsaufnahme 22 an. Die Dichtungsaufnahme 22 hat einen geringeren Durchmesser als der Kolbenkörper 21. Die Dichtungsaufnahme 22 umfasst einen im Wesentlichen konischen Dichtungssitz 23. Die Kegeloberfläche des Dichtungssitzes 23 ist folglich um einen Winkel α gegenüber einer Rotationsachse 24 der Kolben/Zylinderanordnung 14 geneigt. Der Übergang des Kolbenkörpers 21 zur Dichtungsaufnahme 22 wird durch eine scheibenförmige Anlagefläche 25 gebildet, die in Richtung des Druckraums 17 gesehen in eine im Wesentlichen trapezförmige umlaufende Ringnut 26 übergeht. Die umlaufende Ringnut 26 umfasst eine erste Schräge 27, die von der Anlagefläche 25 aus gesehen in Richtung der Rotationsachse 24 geneigt ist, sowie eine zweite Schräge 28, die in etwa senkrecht zur Rotationsachse 24 und damit in etwa parallel zur Anlagefläche 25 angeordnet ist. Die umlaufende Ringnut 26 bildet so eine Hinterschneidung, die zwischen dem Dichtungssitz 23 und der Anlagefläche 25 angeordnet ist. Der Kolben 15 ist zumindest im Bereich der Aufnahme der Dichtung 19 aus einem thermoplastischen Kunststoff als Spritzgussteil gefertigt.

Die Dichtung 19 umfasst eine kolbenseitige Dichtlippe 29, die in Richtung der Anlagefläche 25 in eine umlaufende Ausbuchtung 30 übergeht. Die umlaufende Ausbuchtung 30 ist an einem Dichtungsrücken 31 angeordnet, der in eine zylinderseitige Dichtlippe 32 übergeht. Die kolbenseitige Dichtlippe 29 sowie die umlaufende Ausbuchtung 30 korrespondieren mit der umlaufenen Ringnut 26 sowie dem Dichtungssitz 23 und bilden mit diesem zusammen eine formschlüssige Verbindung.

Der Dichtungssitz 23 ermöglicht durch die Schräge α ein Fertigungsverfahren, bei dem eine Matrize eines Druck- oder Spritzgussteiles in Richtung des Pfeils 33 abgezogen werden kann. Die übrigen Teile des Kolbens 14 können beispielsweise mit einer in der Zeichenebene der Fig. 2 getrennten Matrize geformt werden. Dabei kann auch gleichzeitig die umlaufende Ringnut 26 geformt werden. Mit dieser Maßnahme ist an dem Dichtungssitz 23 kein Entformungsgrat vorhanden. Dadurch wird die Dichtwirkung zwischen Dichtungssitz 23 und der kolbenseitigen Dichtlippe 29 nicht beeinträchtigt.

### Bezugszeichenliste

- 1: Hydraulisches System
- 2: Druckbegrenzungsventil
- 3: Kupplungsausrückvorrichtung
- 4: Geberzylinder
- 5: Nehmerzylinder
- 6: Ausrückmechanik
- 7: Druckleitung
- 8: Kupplung
- 9: Betätigungsglied
- 10: mechanischen Übertragung
- 11: Getriebeeingangswelle
- 12: Brennkraftmaschine
- 13: Kurbelwelle
- 14: Kolben/Zylinderanordnung
- 15: Kolben
- 16: Zylinder
- 17: Druckraum
- 18: Vorlastfeder
- 19: Dichtung
- 20: Spalt
- 21: Kolbenkörper
- 22: Dichtungsaufnahme
- 23: Dichtungssitz
- 24: Rotationsachse
- 25: Anlagefläche
- 26: Umlaufende Ringnut
- 27: Erste Schräge
- 28: Zweite Schräge
- 29: Kolbenseitige Dichtlippe
- 30: Umlaufende Ausbuchtung
- 31: Dichtungsrücken
- 32: Zylinderseitige Dichtlippe
- 33: Pfeil

## Patentansprüche

1. Kolben (15) für einen Zylinder (16), insbesondere Kolben (15) für einen Geberzylinder (4) oder Nehmerzylinder (5) eines hydraulischen Systems (1), insbesondere eines hydraulischen Systems (1) zur Betätigung einer Fahrzeugkupplung oder Betriebsbremse eines Kraftfahrzeuges, wobei der Kolben (15) und der Zylinder (16) einen Druckraum (17) einschließen, der mittels einer Dichtung (19) gegenüber einem Nachlaufraum oder gegenüber der Umgebung abgedichtet ist, **dadurch gekennzeichnet, dass** der Kolben (15) eine Dichtungsaufnahme (22) mit einem im Wesentlichen kegelförmigen Dichtungssitz (23) zur Aufnahme der Dichtung (19) aufweist.

2. Kolben nach Anspruch 1, **dadurch gekennzeichnet, dass** die Dichtungsaufnahme (22) eine umlaufende Ringnut (26) umfasst, in die eine umlaufende Ausbuchtung (30) der Dichtung (19) eingreift.

3. Kolben nach Anspruch 2, **dadurch gekennzeichnet, dass** die umlaufende Ringnut (26) einen im Wesentlichen trapezförmigen Querschnitt hat.

4. Kolben nach Anspruch 3, **dadurch gekennzeichnet, dass** die umlaufende Ausbuchtung (30) einen zu der umlaufenden Ringnut (26) korrespondierenden Querschnitt hat.

5. Kolben nach einem der Ansprüche 2 bis 4, **dadurch gekennzeichnet, dass** die umlaufende Ringnut (26) an der dem Druckraum (17) abgewandten Seite der Dichtungsaufnahme (22) angeordnet ist.

6. Kolben nach einem der Ansprüche 1 bis 5, **dadurch gekennzeichnet, dass** der Kolben aus Kunststoff ist.

7. Kolben nach Anspruch 6, **dadurch gekennzeichnet, dass** der Kolben ein Spritzgussteil ist.

8. Kolben nach einem der Ansprüche 1 bis 6, **dadurch gekennzeichnet, dass** der kegelförmige Dichtungssitz (23) mittels einer axial entformbaren Matrize hergestellt wurde.

9. Kolben nach Anspruch 8, **dadurch gekennzeichnet, dass** der Dichtungssitz (23) gratfrei ausgebildet ist.

10. Verfahren zur Herstellung eines Kolbens nach einem der Ansprüche 1 bis 5, **dadurch gekennzeichnet, dass** dieser durch Gießen, insbesondere Spritzgießen, hergestellt wird.

11. Verfahren nach Anspruch 10, **dadurch gekennzeichnet, dass** der kegelförmige Dichtungssitz (23) mittels einer axial entformbaren Matrize hergestellt wird.
